# EUROPÄISCHE PATENTSCHRIFT

(11) **EP 0 373 735 B1**
(45) Veröffentlichungstag und Bekanntmachung des Hinweises auf die Patenterteilung: **13.04.1994**
(21) Anmeldenummer: 89250108.1
(22) Anmeldetag: 05.12.1989
(51) Int. Cl.: G02B 6/44, G02B 6/36

(54) **Anordnung mit mehreren Spleissmodulen**
Arrangement with several splicing modules
Dispositif avec plusieurs modules de soudure

(30) Priorität: 16.12.1988 DE 3842904
(43) Veröffentlichungstag der Anmeldung: 20.06.1990
(73) Patentinhaber: SIEMENS AKTIENGESELLSCHAFT, 80333 München (DE)
(72) Erfinder: Finzel, Lothar, D-8000 München 60 (DE)

(56) Entgegenhaltungen:
- EP-A- 370 819
- DE-A- 3 133 586
- DE-U- 8 623 521
- PATENT ABSTRACTS OF JAPAN, Band 9, Nr. 304 (P-409)[2027], 30. November 1985; & JP-A-60 136 704

## Beschreibung

Die Erfindung bezieht sich auf eine Anordnung mit mehreren Spleißmodulen, in denen jeweils mehrere Lichtwellenleiter-Verbinder abgelegt sind, wobei die Spleißmodule schwenkbar angeordnet und einzeln zugänglich sind und mindestens ein Lichtwellenleiterbündel zu jedem Spleißmodul führt, wobei die Spleißmodule auf einem Träger angeordnet sind und jedes Spleißmodul einzeln mit dem Träger schwenkbar verbunden ist.

Bei der Verspleißung von mehreren Lichtwellenleiter-Kabeln, die jeweils mehrere optische Fasern enthalten, ist es nötig, die einzelnen Spleiße möglichst platzsparend unterzubringen. Da es manchmal notwendig wird, die Spleiße zu reparieren oder zu erneuern, ist es außerdem wichtig, daß jeder einzelne der Spleiße leicht zugänglich ist.

Aus der DE-OS 31 33 586 ist eine Anordnung von Lichtwellenleiter-Spleißen bekannt, bei der jeweils mehrere Spleiße in einem Spleißmodul zusammengefaßt sind und bei der die einzelnen Spleißmodule einzeln ausschwenkbar sind, um im Bedarfsfall den Zugang zu jedem einzelnen Lichtwellenleiter-Spleiß zu ermöglichen. Die dort beschriebene Anordnung hat allerdings den Nachteil, daß die den Spleißmodulen zugeführten Lichtwellenleiter eine beachtliche Überlänge besitzen müssen, um das Ausschwenken eines Spleißmoduls zu ermöglichen. Außerdem wird sehr viel Platz benötigt, um ein einzelnes Spleißmodul ausschwenken zu können.

In der älteren, nichtvorveröffentlichten EP 0 370 819 - A1 ist eine Anordnung beschrieben, bei der ein Spleißmodul mit einer seiner beiden Längsseiten als Schwenkachse schwenkbar in einem Aufnahmerahmen angebracht ist. Lichtwellenleiter werden durch diesen feststehenden Rahmen etwa parallel sowie mit Abstand zur Schwenkachse hindurchgeführt und in das Spleißmodul an einer Einführstelle eingeführt, die im Bereich der der Schwenkachse gegenüberliegenden, abgewandten Längsseite, d.h. möglichst weit weg von der Schwenkachse, des Spleißmoduls liegt. Dadurch ist eine nicht unerhebliche Überlänge (Ausgleichsstrecke) für die in das Spleißmodul einlaufenden Lichtwellenleiter erforderlich, um diese beim Schwenken ihres Spleißmoduls ohne Beschädigungen mitführen zu können. Dies hat den Nachteil daß die erforderliche Überlänge im Einführbereich zu einem Platzmangel zwischen den einzelnen Spleißmoduln und damit zu einer Beeinträchtigung deren freien Zugänglichkeit führt.

Der Erfindung liegt die Aufgabe zugrunde, eine Anordnung von schwenkbaren Spleißmodulen für Lichtwellenleiter-Spleiße zu schaffen, bei der die Lichtwellenleiter in sicherer und einfacher Weise ihrem Spleißmodul ohne viel Platz zu beanspruchen zugeführt sind.

Die Aufgabe wird erfindungsgemäß dadurch gelöst, daß die Schwenkachse durch das Innere des Spleißmoduls parallel zur Einführungsrichtung der Lichtwellenleiterbündel in das Spleißmodul verläuft, und die Schwenkachsen mehrerer Spleißmodule parallel zueinander verlaufen und daß die Stelle(n), an der (denen) Lichtwellenleiterbündel in ein Spleißmodul hineinverlaufen, auf der Schwenkachse des Spleißmoduls liegen und daß jedes Spleißmodul eine Montageplatte enthält, die an einer ihrer Längsseiten mindestens einen zylindrischen Achsenkörper aufweist, der als Hohlzylinder ausgeführt und in einem mit dem Träger fest verbundenen U-Profil gelagert ist.

Dadurch, daß jedes einzelne Spleißmodul mit dem Träger schwenkbar verbunden ist, und die Einlauf- und die Auslaufstelle, an der jeweils das Lichtwellenleiterbündel in ein Spleißmodul hineinverläuft, auf der Schwenkachse des Spleißmoduls liegen, können die einzelnen Spleißmodule wie die Blätter eines Buches "durchgeblättert" werden, ohne daß beim Ausschwenken eines Moduls die ein- und auslaufenden Lichtwellenleiterbündel mechanisch beansprucht wie z.B. gebogen werden. Die ein- und auslaufenden Lichtwellenleiter werden somit lediglich tordiert und damit nur einer äußerst geringen mechanischen Belastung ausgesetzt. Denn die Stelle, an der ein Lichtwellenleiterbündel in ein Spleißmodul hineinführt, bleibt beim Schwenken des Moduls weitgehend ortsfest. Somit ist auch keine zusätzliche Überlänge des Lichtwellenleiterbündels an dieser Stelle notwendig, um das Spleißmodul schwenken zu können. Auf diese Weise ist jedes einzelne Spleißmodul von beiden Seiten zugänglich. In dem Fall, daß eine Reparatur an einem der Spleiße notwendig wird, braucht keines der Spleißmodule entfernt zu werden. Es wird dazu lediglich das Spleißmodul mit dem reparaturbedürftigen Spleiß seitlich so geschwenkt, daß der reparaturbedürftige Spleiß offen liegt. Gleichzeitig wird das Nachbarmodul auf der Seite, die dem reparaturbedürftigen Spleiß zugewandt ist, zur anderen Seite weggeschwenkt, so daß der reparaturbedürftige Spleiß frei zugänglich wird.

Ein solcher Aufbau eines Spleißmoduls zeichnet sich auch dadurch aus, daß ein Spleißmodul leicht zusammenzusetzen und ebenso leicht mit Lichtwellenleiter-Spleißen zu bestücken ist. Die Einzelteile eines Spleißmoduls lassen sich auf einfache Weise herstellen. Die Montageplatte sowie die Hohlzylinder und die U-Profile lassen sich beispielsweise besonders preisgünstig im Spritzgußverfahren aus einem Kunststoff herstellen. Die Lagerung der Hohlzylinder in U-Profilen bewirkt eine leichte Drehbarkeit des Spleißmoduls. Auf der Montageplatte des Spleißmoduls werden Lichtwellenleiter-Spleiße beispielsweise parallel zueinander nebeneinander in Ablagekämmen abgelegt oder einfach auf die Montageplatte aufgeklebt. Es können beide Seiten der Montageplatte mit Lichtwellenleiter-Spleißen belegt werden. Als Lichtwellenleiter-Verbinder für die Spleiße kann ein an sich bekannte Lichtwellenleiter-Verbinder dienen.

Weiterhin kann die Erfindung so ausgestaltet werden, daß die einem Spleißmodul zugeführten Lichtwellenleiter jeweils durch einen der Hohlzylinder in das Innere des Spleißmoduls 10 verlaufen.

Durch diese Konstruktion liegt die Stelle, an der ein Lichtwellenleiterbündel in das Modul hineinführt, immer in der Nähe der Schwenkachse. Dadurch ergibt sich eine sehr geringe mechanische Beanspruchung der Lichtwellenleiter beim Schwenken des Moduls.

Weiterhin kann die Erfindung vorteilhaft so ausgestaltet werden, daß jeder Hohlzylinder einen durchgenenden Längsschlitz aufweist.

Durch diesen Längsschlitz können die Lichtwellenleiter, die von einem Spleißmodul abgehen, herausgezogen werden, wenn es nötig sein sollte, das gesamte Spleißmodul aus der Anordnung herauszunehmen. Es können auch Lichtwellenleiterpaare, die bereits verspleißt sind, mit dem Lichtwellenleiter-Verbinder durch diese Längsschlitze in das Spleißmodul eingeschoben werden.

Eine weitere Ausgestaltung der Erfindung sieht vor, daß die U-Profile aus einem elastischen Kunststoff bestehen.

Die Elastizität des Kunststoff erlaubt ein besonders einfaches Eindrücken der Hohlzylinder in die U-Profile. Es besteht auf diese Weise keine Gefahr, ein U-Profil oder einen Hohlzylinder zu zerbrechen. Falls die Hohlzylinder einen Längsschlitz aufweisen, so trägt auch dies zur größeren Elastizität in dem Lagermechanismus bei.

Eine weitere Ausgestaltung der Erfindung sieht vor, daß die U-Profile kreissegmentförmige Ausnehmungen aufweisen.

Diese kreissegmentförmigen Ausnehmungen sind so gestaltet, daß sie sich auf den beiden Schenkein eines U-Profils jeweils gegenüber liegen und daß sie einen der Hohlzylinder formschlüssig aufnehmen können. Dadurch können alle nebeneinanderliegenden Spleißmodule in einer repoduzierbaren Höhe über dem Träger befestigt werden, so daß eine übersichtliche Anordnung der Spleißmodule entsteht. Außerdem wird durch die Ausnehmungen verhindert, daß sich ein Spleißmodul mit seinen Hohlzylindern beim Schwenken etwa aus einem U-Profil herausdrückt.

Weiterhin kann die Erfindung so ausgestaltet werden, daß die Spleißmodule Abstandhalter aufweisen.

Durch die Abstandhalter wird vermieden, daß zwei benachtarte Spleißmodule mit ihren Montageplatten bzw. mit den auf den Montageplatten befestigten Lichtwellenleiter-Verbindern einander berühren. Es könnte dann zu einer Beschädigung der Lichtwellenleiter-Spleiße kommen. Die Abstandhalter können an einer Längsseite der Montageplatte angebracht sein, die der Schwenkachse des Moduls abgewandt ist.

Weiterhin kann die Erfindung vorteilhaft so ausgestaltet sein, daß jeweils mehrere Spleißmodule mit einem gemeinsamen Befestigungsmittel versehen sind.

Ein solches Befestigungsmittel kann beispielsweise durch zwei federnde Drahtbügel verwirklicht sein, die jeweils neben den beiden äußersten Spleißmodulen einer Reihe von Spleißmodulen auf dem Träger lösbar befestigt sind und die alle Spleißmodule zwischen sich zusammenpressen.

Die Erfindung kann auch so ausgestaltet sein, daß die einzelnen U-Profile aneinandersteckbar gestaltet sind und daß der Träger aus mehreren aneinandergestecken U-Profilen besteht.

Eine solche Konstruktion hat den Vorteil, daß die Größe des Trägers individuell und vor Ort auf die Anzahl der abzulegenden Spleiße bzw. die Anzahl der benötigten Spleißmodule angepaßt werden kann.

Die Erfindung wird im weiteren anhand eines Ausführungsbeispiels in einer Zeichnung gezeigt und nachfolgend beschrieben.

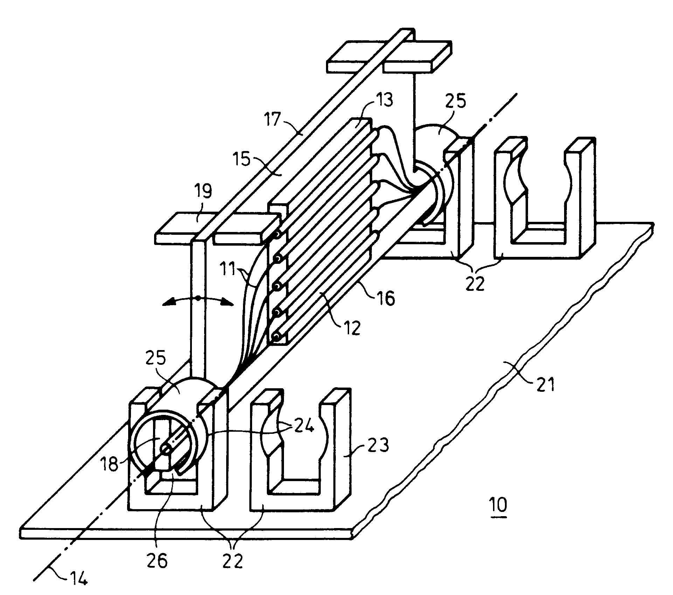

Dabei zeigt die einzige Figur:
Ein Spleißmodul in perspektivischer Ansicht.

Ein Spleißmodul 10 besteht aus einer Montageplatte 15, die an einer ihrer Längsseiten 16 auf beiden Seiten zapfenförmige Fortsätze 18 aufweist. Auf der Montageplatte 15 sind auf beiden Seiten jeweils mehrere Lichtwellenleiter-Verbinder 12 in Ablagekämmen 13 nebeneinander befestigt. Auf die zapfenförmigen Fortsätze 18 an der Längsseite 16 der Montageplatte 15 sind Hohlzylinder 25 aufgeschoben. Die Hohlzylinder sind mit den zapfenförmigen Fortsätzen 18 verklebt. An ihrer Unterseite weisen die Hohlzylinder 25 Längsschlitze 26 auf. Durch die Hohlzylinder 25 sind dem Spleißmodul von beiden Seiten jeweils mehrere Lichtwellenleiter 11 zugeführt, von denen jeweils zwei in einem Lichtwellenleiter-Verbinder 12 miteinander verbunden werden. Die Hohlzylinder 25 sind in U-Profile 22 eingeklemmt, die ihrerseits paarweise auf einem Träger 21 befestigt sind. Die U-Profile 22 weisen an den Innenseiten ihrer Schenkel 23 kreissegmentförmige Ausnehmungen 24 auf, die die Hohlzylinder 25 formschlüssig aufnehmen. Die Hohlzylinder 25 sind in den U-Profilen 22 auf diese Weise drehbar gelagert. Das Spleißmodul 10 ist dadurch um die Schwenkachse 14 schwenkbar. Der Träger 21 mit den Spleißmodulen 10 ist in einer in der Figur nicht dargestellten Muffe untergebracht. Auf dem Träger 21 sind mehrere Paare von U-Profilen 22 in zwei Reihen nebeneinander angeordnet, so daß auf dem Träger eine Reihe von Spleißmodulen 10 nebeneinander schwenkbar angeordnet werden kann. An den Montageplatten 15 jedes Spleißmoduls sind an der Längsseite 17 Abstandhalter 19 angebracht, die den Mindestabstand zwischen zwei nebeneinanderliegenden Spleißmodulen 10 festlegen. Dadurch wird verhindert, daß die Lichtwellenleiter-Verbinder 12 zweier benachbarter Spleißmodule 10 einander berühren und dadurch beschädigt werden.

## Patentansprüche

1. Anordnung mit mehreren Spleißmodulen, in denen jeweils mehrere Lichtwellenleiter-Verbinder abgelegt sind, wobei die Spleißmodule schwenkbar angeordnet und einzeln zugänglich sind und mindestens ein Lichtwellenleiterbündel zu jedem Spleißmodul führt, wobei die Spleißmodule (10) auf einem Träger (21) angeordnet sind und jedes Spleißmodul (10) einzeln mit dem Träger (21) schwenkbar verbunden ist,
**dadurch gekennzeichnet,**
die Schwenkachse (14) durch das Innere des Spleißmoduls (10), parallel zur Einführungsrichtung der Lichtwellenleiterbündel in das Spleißmodul (10) verläuft, und die Schwenkachsen mehrerer Spleißmodule parallel zueinander verlaufen,
und daß die Stelle(n), an der (denen) Lichtwellenleiterbündel in ein Spleißmodul hineinverlaufen, auf der Schwenkachse des Spleißmoduls liegen und daß jedes Spleißmodul (10) eine Montageplatte (15) enthält, die an einer ihrer Längsseiten (16) mindestens einen zylindrischen Achsenkörper aufweist, der als Hohlzylinder (25) ausgeführt und in einem mit dem Träger (21) fest verbundenen U-Profil (22) gelagert ist.

2. Anordnung nach Anspruch 1,
**dadurch gekennzeichnet,**
daß die einem Spleißmodul (10) zugeführten Lichtwellenleiter (11) jeweils durch einen der Hohlzylinder (25) in das Innere des Spleißmoduls (10) verlaufen.

3. Anordunung nach Anspruch 2,
**dadurch gekennzeichnet,**
daß jeder Hohlzylinder (25) einen durchgehenden Längsschlitz (26) aufweist.

4. Anordnung nach Anspruch 1 oder einem der folgenden,
**dadurch gekennzeichnet,**
daß die U-Profile (22) aus einem elastischen Kunststoff bestehen.

5. Anordnung nach Anspruch 1 oder einem der folgenden,
**dadurch gekennzeichnet,**
daß die U-Profile (22) kreissegmentförmige Ausnehmungen (24) aufweisen.

6. Anordnung nach Anspruch 1 oder einem der folgenden,
**dadurch gekennzeichnet,**
daß die Spleißmodule (10) Abstandhalter (19) aufweisen.

7. Anordnung nach Anspruch 1 oder einem der folgenden,
**dadurch gekennzeichnet,**
daß jeweils mehrere Spleißmodule (10) mit einem gemeinsamen Befestigungsmittel versehen sind.

8. Anordnung nach Anspruch 1 oder einem der folgenden,
**dadurch gekennzeichnet,**
daß die einzelnen U-Profile (22) aneinandersteckbar gestaltet sind und daß der Träger (21) aus mehreren aneinandergesteckten U-Profilen (22) besteht.

## Claims

1. Arrangement having a plurality of splicing modules in which in each case a plurality of optical waveguide connectors are secured, the splicing modules being pivotably arranged and individually accessible, and at least one optical waveguide bundle leading to each splicing module, the splicing modules (10) being arranged on a carrier (21) and each splicing module (10) being individually pivotably connected to the carrier (21), characterized in that the pivoting axis (14) extends through the interior of the splicing module (10) parallel to the direction of insertion of the optical waveguide bundles into the splicing module (10), and the pivoting axes of a plurality of splicing modules extend parallel to one another, and in that the site(s) at which optical waveguide bundles extend into a splicing module are situated on the pivoting axis of the splicing module, and in that each splicing module (10) contains a mounting plate (15) which has on one of its longitudinal sides (16) at least one cylindrical axial body which is designed as a hollow cylinder (25) and is supported in a U-section (22) fixedly connected to the carrier (21).

2. Arrangement according to Claim 1, characterized in that the optical waveguides (11) fed to a splicing module (10) in each case extend through one of the hollow cylinders (25) into the interior of the splicing module (10).

3. Arrangement according to Claim 2, characterized in that each hollow cylinder (25) has a continuous longitudinal slit (26).

4. Arrangement according to Claim 1 or one of the following claims, characterized in that the U-sections (22) comprise an elastic synthetic material.

5. Arrangement according to Claim 1 or one of the following claims, characterized in that the U-sections (22) have recesses (24) in the shape of circular segments.

6. Arrangement according to Claim 1 or one of the following claims, characterized in that the splicing modules (10) have spacers (19).

7. Arrangement according to Claim 1 or one of the following claims, characterized in that in each case a plurality of splicing modules (10) are provided with a common fastening means.

8. Arrangement according to Claim 1 or one of the following claims, characterized in that the individual U-sections (22) are configured in a manner capable of being plugged onto one another, and in that the carrier (21) comprises a plurality of U-sections (22) plugged onto one another.

## Revendications

1. Dispositif comportant plusieurs modules d'épissure ou de raccordement, dans lesquels sont disposés respectivement plusieurs connecteurs de guides d'ondes lumineuses, dans lequel les modules d'épissure sont disposés de manière à pouvoir pivoter et sont accessibles individuellement et au moins un faisceau de guides d'ondes lumineuses aboutit à chaque module d'épissure, les modules d'épissure (10) sont disposés sur un support (21) et chaque module d'épissure (10) est relié individuellement au support (21) de manière à pouvoir pivoter, caractérisé par le fait que l'axe de pivotement (14) s'étend à l'intérieur du module d'épissure (10), parallèlement à la direction d'introduction des faisceaux de guides d'ondes lumineuses dans le module d'épissure (10), et les axes de pivotement de plusieurs modules d'épissure sont parallèles entre eux, et que le ou les emplacements, au niveau du ou desquels des faisceaux de guides d'ondes lumineuses pénètrent dans le module d'épissure, sont situés sur l'axe de pivotement du module d'épissure et que chaque module d'épissure (10) comporte une plaque de montage (15), qui possède, sur l'un de ces côtés longitudinaux (16), au moins un corps axial cylindrique, qui est réalisé sous la forme d'un cylindre évidé (25) et est monté dans un profilé en U (22) relié rigidement au support (21).

2. Dispositif suivant la revendication 1, caractérisé par le fait que les guides d'ondes lumineuses (11), aboutissant à un module d'épissure (10) s'étendent respectivement à travers l'un des cylindres creux (25) pour pénétrer à l'intérieur du module d'épissure (10).

3. Dispositif suivant la revendication 2, caractérisé par le fait que chaque cylindre creux (25) possède une fente longitudinale continue (26).

4. Dispositif suivant la revendication 1 ou l'une des revendications suivantes, caractérisé par le fait que les profilés en U (22) sont constitués par une matière plastique élastique.

5. Dispositif suivant la revendication 1 ou l'une des suivantes, caractérisé par le fait que les profilés en U (22) possèdent des évidements (24) en forme de segments de cercle.

6. Dispositif suivant la revendication 1 ou l'une des suivantes, caractérisé par le fait que les modules d'épissure (10) possèdent des entretoises (19).

7. Dispositif suivant la revendication 1 ou l'une des suivantes, caractérisé par le fait que respectivement plusieurs modules d'épissure (10) sont pourvus d'un dispositif de fixation commun.

8. Dispositif suivant la revendication 1 ou l'une des suivantes, caractérisé par le fait que les différents profilés en U (22) sont agencés de manière à pouvoir être enfichés les uns dans les autres et que le support (21) est constitué de plusieurs profilés en U (22) enfichés les uns dans les autres.
